# EUROPÄISCHE PATENTSCHRIFT

(11) **EP 4 464 989 B1**
(45) Veröffentlichungstag und Bekanntmachung des Hinweises auf die Patenterteilung: **27.08.2025**
(21) Anmeldenummer: 24162651.4
(22) Anmeldetag: 11.03.2024
(51) Int. Cl.: G01F 1/58

(54) **VERFAHREN ZUR OBERFLÄCHENBEHANDLUNG VON IN EIN MESSROHR FÜR MAGNETISCH-INDUKTIVE" DURCHFLUSSMESSGERÄTE EINGESETZTE MESSELEKTRODEN**
METHOD FOR TREATING THE SURFACE OF MEASURING ELECTRODES USED IN A MEASURING TUBE FOR MAGNETIC-INDUCTIVE FLOW METERS
PROCÉDÉ DE TRAITEMENT DE SURFACE D'ÉLECTRODES DE MESURE UTILISÉES DANS UN TUBE DE MESURE POUR DES DÉBITMÈTRES À INDUCTION MAGNÉTIQUE

(30) Priorität: 19.05.2023 DE 102023113189
(43) Veröffentlichungstag der Anmeldung: 20.11.2024
(73) Patentinhaber: Krohne AG, 4019 Basel (CH)
(72) Erfinder: den Haan, Arthur, 2311VH Leiden (NL); Reijnen, Antwan J., 2497 CB Den Haag (NL)
(74) Vertreter: Gesthuysen Patentanwälte

(56) Entgegenhaltungen:
- DE-A1- 102007 061 798
- DE-A1- 102008 059 067
- DE-A1- 2 950 039
- DE-B3- 102015 112 018
- DE-C1- 19 722 977
- US-A- 4 565 619

## Beschreibung

Die Erfindung betrifft ein Verfahren zur Oberflächenbehandlung von in ein Messrohr für magnetisch-induktive Durchflussmessgeräte eingesetzte Messelektroden, wobei die Messelektroden zumindest ein elektrisch schlecht leitfähiges Trägermaterial und ein in das Trägermaterial eingebettetes elektrisch gut leitfähiges Leitmaterial aufweisen, sodass die Messelektroden insgesamt eine für die Messaufgabe des magnetisch-induktiven Durchflussmessgeräts geeignete elektrische Gesamtleitfähigkeit aufweisen.

Das Messprinzip von magnetisch-induktiven Durchflussmessgeräten beruht auf der Kraftwirkung auf bewegte Ladungen in einem Magnetfeld, wenn die Bewegungsrichtung der Ladungsträger eine Komponente senkrecht zu dem Magnetfeld aufweist. Durch getrennte Ladungsträger unterschiedlicher Vorzeichen wird in dem das Messrohr durchströmenden Medium eine Spannung induziert, die im Wesentlichen proportional zu der Strömungsgeschwindigkeit des Mediums in dem Messrohr ist, sodass auf den Volumenstrom im Messrohr geschlossen werden kann.

Die induzierte Spannung wird mit den zuvor genannten Messelektroden aufgenommen, die im vorliegenden Fall voraussetzungsgemäß eine gewisse elektrische Leitfähigkeit haben müssen. Das Messrohr selbst ist entweder aus einem elektrisch nicht leitfähigen Material gefertigt oder mit einem solchen Material ausgekleidet, wie beispielsweise Polyetheretherketon (PEEK).

Die in das Messrohr eingesetzten Messelektroden sind zumindest gebildet aus einem elektrisch schlecht leitfähigen Trägermaterial und einem in das Trägermaterial eingebetteten elektrisch gut leitfähigen Leitmaterial, das den Messelektroden insgesamt eine für die Messung taugliche elektrische Leitfähigkeit verleiht. Derartige Messelektroden werden beispielsweise im Spritzgussverfahren hergestellt. Die Messelektroden weisen im Oberflächenbereich häufig zunächst eine reduzierte elektrische Oberflächenleitfähigkeit auf, weil das in dem Trägermaterial eingebettete Leitmaterial von dem Trägermaterial zu einem großen Teil überdeckt ist, sodass das Leitmaterial im Bereich der Oberfläche nur einen geringen Oberflächenanteil hat.

DE 197 22 977 C1 offenbart einen elektromagnetischen Durchflussmesser, wobei die Elektrodenanordnung mindestens eine Elektrode aufweist, die mit einer Schutzschicht überzogen ist. Mit einem derartigen Durchflußmesser soll der Rauschpegel gering gehalten werden können, ohne eine Verschlechterung der Lebensdauer in Kauf nehmen zu müssen. Hierzu ist die Schutzschicht aus einem harten Metalloxid gebildet, das durch Gasphasenabscheidung oder Aufdampfen oder mit Flammen-, Elektroden- oder Plasma-unterstützten Pulverspritzverfahren mit der Elektrode verbunden ist, wobei die Schicht ein vorbestimmtes Muster von künstlich erzeugten Durchbrechungen aufweist. Die Durchbrechungen sind künstlich erzeugt, beispielsweise sind sie geätzt, mit einem Laserstrahl gebrannt oder mit Ultraschall gebohrt. DE 10 2007 061798 A1 offenbart ein magnetisch induktives Durchflussmesssystem zur Bestimmung und/oder Überwachung des Durchflusses eines Messmediums durch ein Messrohr, wobei die Elektroden mit einem Laser/ Plasma-Verfahren eindotiert sind.

Um die Oberflächenleitfähigkeit der Messelektroden zu erhöhen, ist es bekannt, den Oberflächenbereich der Messelektroden zu behandeln, beispielsweise mittels mechanischer Strahlverfahren. Dabei werden abrasive Partikel in einem Gasstrom beschleunigt und der so entstehende Gas-Partikel-Strahl wird auf die Oberflächenbereiche der Messelektroden gerichtet, wodurch die Oberfläche aufgeraut und Leitmaterial im Oberflächenbereich freigelegt wird. Diese Vorgehensweise bringt den Nachteil mit sich, dass das Trägermaterial und/oder das Leitmaterial im Oberflächenbereich oft strukturell geschädigt wird. Wenn das Leitmaterial beispielsweise durch elektrisch leitfähige Kohlenstofffasern gebildet wird, können diese durch das Strahlverfahren beschädigt werden, sodass die erreichbare Oberflächenleitfähigkeit reduziert ist bzw. sich die Oberflächenleitfähigkeit der Messelektroden im Betrieb ändern kann, weil sich geschädigtes Leitmaterial im Mediumstrom ablöst oder weil die beschädigte Oberfläche verstärkte Anhaftungsneigung hat.

Aufgabe der vorliegenden Erfindung ist es daher, ein Verfahren zur Oberflächenbehandlung von in ein Messrohr für magnetisch-induktive Durchflussmessgeräte eingesetzte Messelektroden anzugeben, bei dem die zuvor beschriebenen Nachteile vermieden oder zumindest reduziert werden.

Das erfindungsgemäße Verfahren, mit dem die zuvor hergeleitete Aufgabe gelöst wird, zeichnet sich im Wesentlichen dadurch aus, dass die mit der Innenwand des Messrohrs abschließenden Oberflächen der Messelektroden mit wenigstens einem Laserstrahl bestrahlt werden, dass dadurch das Trägermaterial im Oberflächenbereich der Messelektroden zumindest teilweise abgetragen wird und dadurch das eingebettete elektrisch gut leitfähige Leitmaterial im Oberflächenbereich der Messelektroden zumindest teilweise freigelegt wird und die elektrische Oberflächenleitfähigkeit der Messelektroden erhöht wird.

Es hat sich gezeigt, dass Laserstrahlen grundsätzlich geeignet sind, den Oberflächenbereich der hier vorausgesetzten Messelektroden so zu behandeln, dass die Leitfähigkeit an der Oberfläche der Messelektroden erhöht wird, und zwar ohne dass die Messelektroden im Oberflächenbereich so geschädigt werden, wie dies aus dem Stand der Technik bekannt ist.

Gemäß einer bevorzugten Ausgestaltung des Verfahrens wird der Laserstrahl flachwinkelig auf die Oberfläche der Messelektroden gerichtet, insbesondere in einem Winkel von mehr als 75° (Winkelgrad, bei einem Vollwinkel von 360°) zur Flächennormalen der Oberfläche der Messelektroden, speziell wird ein noch flacherer Winkel verwendet, nämlich von mehr als 83° zur Flächennormalen der Oberfläche der Messelektroden, also von weniger als 7° zur Messrohroberfläche bzw. zur Oberfläche der Messelektroden. Dadurch können überraschenderweise hervorragende Oberflächenergebnisse erzielt werden bei deutlicher Freilegung des Leitmaterials. Das hängt möglicherweise damit zusammen, dass sich über den flachen Winkel der Energieeintrag des Laserstrahls in die Oberfläche der Messelektroden gut einstellen lässt.

Bevorzugt wird die Wellenlänge des Laserstrahls so gewählt, dass die Photonenenergie die molekularen Bindungskräfte des Trägermaterials überwindet und das Trägermaterial bei Bestrahlung freisetzt. Vorzugsweise wird das Trägermaterial mit einem Leitmaterial kombiniert, dessen molekularen Bindungskräfte größer sind als die des Trägermaterials. In diesem Fall wird die Wellenlänge des Laserstrahls zusätzlich so gewählt, dass die Photonenenergie die molekularen Bindungskräfte des Leitmaterials nicht überwindet und das Leitmaterial nicht freisetzt.

Vorzugsweise wird der Laserstrahl so eingestellt, dass er im Auftreffbereich auf der Oberfläche der Messelektroden einen maximalen Durchmesser von 100 µm aufweist, bevorzugt hat der Laserstrahl im Auftreffbereich einen Durchmesser von maximal 20 µm. Der Durchmesser des Laserstrahls im Auftreffbereich ist damit also erheblich kleiner als der Durchmesser üblicher Messelektroden bzw. des Oberflächenbereichs der Messelektroden, über den im Betriebszustand des magnetisch-induktiven Durchflussmessgeräts das im Innenraum des Messrohrs befindliche Medium kontaktiert wird.

Bei einer bevorzugten Ausgestaltung des Verfahrens wird der Laserstrahl in geraden Linien über die Oberflächen der Messelektroden geführt, vorzugsweise in geraden parallelen Linien. Bevorzugt überstreicht der Laserstrahl auch die Übergangsbereiche zwischen den Messelektroden und dem Messrohr, in das die Messelektroden eingesetzt sind.

Eine Weiterbildung des Verfahrens ist dadurch gekennzeichnet, dass der Laserstrahl gepulst ist, insbesondere mit einer Pulsdauer im Bereich von weniger als 50 Femtosekunden, besonders bevorzugt im Bereich von weniger als 10 Femtosekunden. Es hat sich herausgestellt, dass die hohen Spitzenleistungen der Laserpulse besonders vorteilhaft für den Abtrag vieler Trägermaterialien ist.

In einer besonders bevorzugten Weiterentwicklung des Verfahrens ist vorgesehen, dass die Wellenlänge des Laserstrahls und/oder die Pulsdauer des Laserstrahls und/oder die Bewegungsgeschwindigkeit des Laserstrahls so gewählt bzw. aufeinander abgestimmt werden, dass sich das abgetragene Trägermaterial und/oder das abgetragene Leitmaterial auf der Oberfläche der Messelektroden nicht niederschlagen bzw. nicht niederschlägt.

Eine weitere bevorzugte Ausgestaltung des Verfahrens ist dadurch gekennzeichnet, dass die Wellenlänge des Laserstrahls und/oder die Pulsdauer des Laserstrahls und/oder die Bewegungsgeschwindigkeit des Laserstrahls so gewählt bzw. aufeinander abgestimmt werden, dass zumindest das an der Messelektrode verbleibende Trägermaterial chemisch nicht verändert wird, insbesondere wobei auch das freigelegte Leitmaterial chemisch und/oder strukturell nicht verändert wird. Insbesondere soll vermieden werden, dass die molekulare Struktur des Trägermaterials verändert wird oder Moleküle des Trägermaterials Verbindungen mit anderen Stoffen eingehen (zum Beispiel Sauerstoff). Wie verschiedene Versuchsreihen gezeigt haben, ist eine solche Abstimmung der Parameter ohne Weiteres möglich, worin gerade der Vorteil gegenüber den bekannten mechanisch abrasiven Behandlungsverfahren liegt. Die Überprüfung auf strukturelle Veränderungen kann beispielsweise mit einem Rasterelektronenmikroskop erfolgen.

Vorzugsweise wird das Messrohr während der Bestrahlung der Oberflächen der Messelektroden mit dem Laserstrahl von einem Gas durchströmt, wobei das Gas das von den Messelektroden abgetragene Material fortträgt. Besonders bevorzugt handelt es sich bei dem Gas um ein möglichst reaktionsträges Gas, also um ein Inertgas. Vorzugsweise wird dazu Stickstoff verwendet, das sich als hinreichend reaktionsträge gezeigt hat.

Das Verfahren wird vorzugsweise bei Messelektroden angewendet, bei denen das Trägermaterial Polyetheretherketon (PEEK) ist, insbesondere wenn als Leitmaterial elektrisch leitfähige Kohlenstofffasern verwendet werden. In diesem Zusammenhang wird bei dem Laserstrahl vorzugsweise eine Wellenlänge im Bereich von 355 nm und 500 nm gewählt, insbesondere im Bereich von 355 nm und 380 nm, da hier die Energieabsorption von PEEK sehr hoch ist.

Bei einer Weiterbildung des Verfahrens ist vorgesehen, dass die Impedanz der oberflächenbehandelten Messelektroden in einem Überprüfungsschritt gemessen wird und die Parameter Wellenlänge des Laserstrahls und/oder Pulsdauer des Laserstrahls und/oder Bewegungsgeschwindigkeit des Laserstrahls so gewählt oder aufeinander abgestimmt werden, dass eine vorgegebene Impedanz der oberflächenbehandelten Messelektroden, insbesondere einer vorgegebenen Impedanz der Medium/Oberflächen-Grenzschicht der oberflächenbehandelten Messelektroden erreicht wird. Vorzugsweise wird der Überprüfungsschritt im Produktionsprozess nach einer Chargenänderung des Trägermaterials und/oder des Leitmaterials durchgeführt.

Im Einzelnen gibt es nun eine Vielzahl von Möglichkeiten, das erfindungsgemäße Verfahren zur Oberflächenbehandlung von in ein Messrohr für magnetisch-induktive Durchflussmessgeräte eingesetzte Messelektroden auszugestalten und weiterzubilden. Dazu wird verwiesen, einerseits auf die dem unabhängigen Patentanspruch nachgeordneten Patentansprüche, andererseits auf die folgende Beschreibung von Ausführungsbeispielen in Verbindung mit der Zeichnung. In der Zeichnung zeigen
- Fig. 1: ein Messrohr eines magnetisch-induktiven Durchflussmessgeräts mit eingesetzten Messelektroden,
- Fig. 2: eine Aufnahme des Oberflächenbereichs einer in das Messrohr eines magnetisch-induktiven Durchflussmessgeräts eingesetzten Messelektrode,
- Fig. 3: eine elektronenmikroskopische Aufnahme des Oberflächenbereichs einer Messelektrode, der mit einem Strahlverfahren bearbeitet worden ist,
- Fig. 4: schematisch das erfindungsgemäße Verfahren zur Oberflächenbehandlung von in ein Messrohr für magnetisch-induktive Durchflussmessgeräte eingesetzte Messelektroden,
- Fig. 5: das Messrohr eines magnetisch-induktiven Durchflussmessgeräts mit eingesetzten Messelektroden und angedeuteter Behandlung durch einen Laserstrahl,
- Fig. 6: schematisch die Bearbeitungsreihenfolge des Oberflächenbereichs einer Messelektroden mit einem Laserstrahl und
- Fig. 7: eine elektronenmikroskopische Aufnahme des Oberflächenbereichs einer mit einem Laserstrahl bearbeiteten Messelektrode.

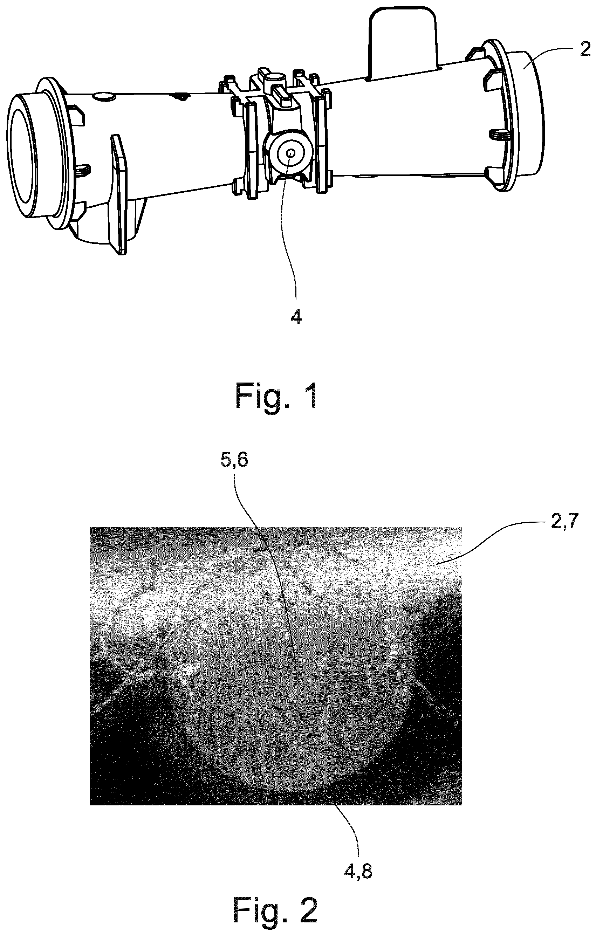

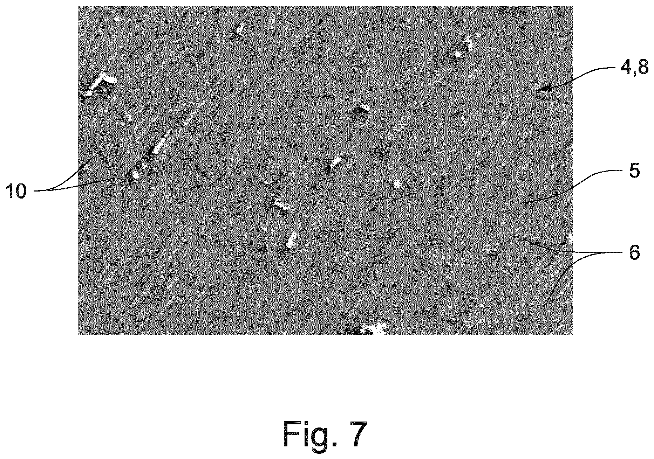

Die Fig. 1 bis 7 zeigen verschiedene Aspekte eines Verfahrens 1 zur Oberflächenbehandlung von in ein Messrohr 2 für magnetisch-induktive Durchflussmessgeräte eingesetzte Messelektroden 4. Das Messrohr 2 selbst besteht aus glasfaserverstärktem Polyetheretherketon (PEEK), das elektrisch nicht leitfähig ist. Die zum Betrieb eines magnetisch-induktiven Durchflussmessgeräts sonst weiterhin erforderlichen Komponenten, wie beispielsweise eine Magnetfeldeinrichtung, die im Bereich der Messelektroden 4 ein Magnetfeld im Innenraum des Messrohrs 2 erzeugt, sind hier aus Gründen der Übersichtlichkeit absichtlich nicht dargestellt.

Die Messelektroden 4 weisen eine elektrische Gesamtleitfähigkeit auf, die es ermöglicht, die Messaufgabe durchzuführen, nämlich eine bei Betrieb des magnetisch-induktiven Durchflussmessgeräts in dem das Messrohr 2 durchströmenden Medium induzierte Spannung als eigentliche interessierende Messgröße aufzunehmen. Die Messelektroden 4 werden daher in Ausnehmungen des Messrohrs 2 - beispielsweise in Bohrungen - angeordnet oder dort auch erst hergestellt (Spritzguss), wobei jeweils ein Oberflächenbereich 8 der Messelektroden 4 mit der Innenwand 7 des Messrohrs 2 abschließt. Die Innenwand 7 des Messrohrs 2 und der Oberflächenbereich 8 der Messelektroden 4 bilden eine weitestgehend ebene und mechanisch übergangslose Gesamtoberfläche, die strömungstechnisch praktisch zu keiner Störung führt.

In Fig. 2 ist eine Nahaufnahme des Oberflächenbereichs 8 der Messelektrode 4 gezeigt, die einen nahezu kreisförmigen Querschnitt hat. Der Oberflächenbereich 8 der Messelektrode 4 und die Oberfläche der Innenwand 7 des Messrohrs 2 gehen praktisch übergangslos ineinander über, eine klar definierte Grenze zwischen den Bereichen ist lediglich optisch auszumachen.

Allen hier gezeigten Messelektroden 4 ist gemein, dass die Messelektroden 4 zumindest ein elektrisch schlecht leitfähiges Trägermaterial 5 aufweisen, das in den vorliegenden Beispielen Polyetheretherketon (PEEK) ist, und ferner ein in das Trägermaterial 5 eingebettetes elektrisch gut leitfähiges Material 6 aufweisen, bei dem es sich in den dargestellten Fällen um Kohlenstofffasern handelt. Die Kohlenstofffasern sind in einer derartigen Menge in den Messelektroden 4 vorhanden, dass die Messelektroden 4 im Ergebnis eine für die Messaufgabe des magnetisch-induktiven Durchflussmessgeräts geeignete elektrische Gesamtleitfähigkeit aufweisen.

Die hier dargestellten Messelektroden 4 sind durch ein Spritzgussverfahren hergestellt worden. Fig. 2 zeigt die unbehandelten Oberflächen 8 nach Einbringung der Messelektroden 4 in die Wand des Messrohrs 2. Der Oberflächenbereich 8 der Messelektrode 4 weist eine reduzierte elektrische Oberflächenleitfähigkeit auf, da das gut leitfähige Leitmaterial 6 in Form von Kohlenstofffasern im Oberflächenbereich 8 der Messelektroden 4 praktisch in dem Trägermaterial 5 versunken ist und das Leitmaterial 6 in Form der Kohlenstofffaser von dem Trägermaterial 5 weitestgehend überdeckt wird. Im Stand der Technik ist es daher bekannt, den Oberflächenbereich 8 der Messelektroden 4 einer Oberflächenbehandlung zu unterziehen, beispielsweise durch ein mechanisches Strahlverfahren, um das Leitmaterial 6 im Oberflächenbereich 8 der Messelektroden 4 freizulegen.

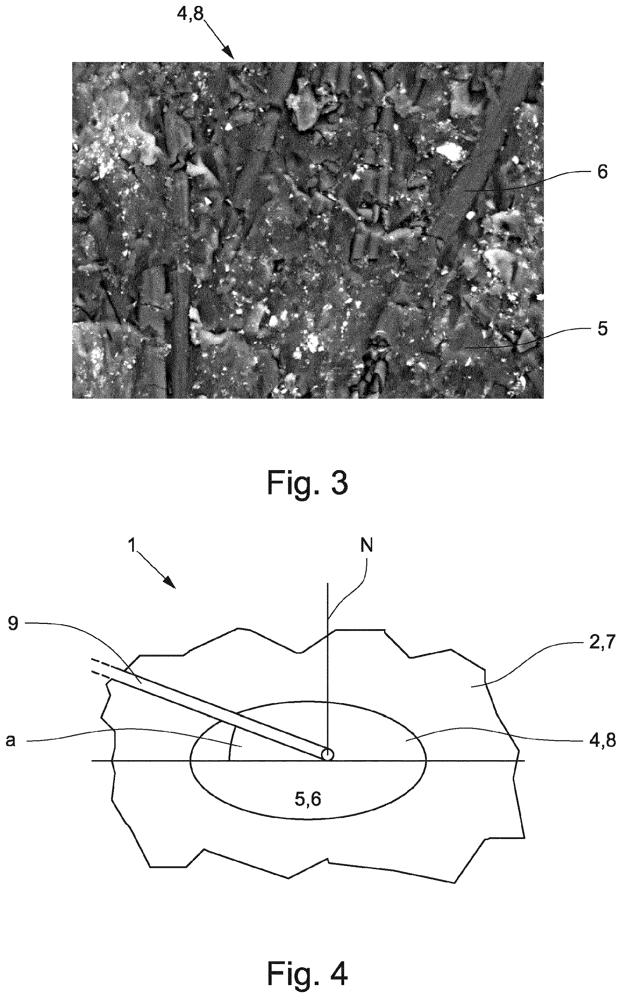

Fig. 3 zeigt das Ergebnis einer solchen Strahlbehandlung mit Elektrokorund. Es ist zu erkennen, dass die das Leitmaterial 6 bildenden Kohlenstofffasern teilweise freigelegt sind, doch sind die Fasern strukturell stark in Mitleidenschaft gezogen worden, sie sind gesplittert, gebrochen und deformiert. Das Trägermaterial 5 ist ebenfalls strukturell beeinträchtigt, es weist Risse auf und starke Unebenheiten. Dies hat zur Folge, dass die Haltefähigkeit des Trägermaterials 5 für die darin eingebetteten Kohlenstofffasern 6 deutlich eingeschränkt ist. Der Strahlprozess ist insgesamt nur schwer zu kontrollieren und der Oberflächenbereich 8 der Messelektroden 4 steht immer in Gefahr, stark geschädigt und unstabil zu werden.

In Fig. 4 ist das erfindungsgemäße Verfahren 1 zur Oberflächenbehandlung von Messelektroden 4 dargestellt. Das Verfahren 1 zeichnet sich dadurch aus, dass die mit der Innenwand 7 des Messrohrs 2 abschließenden Oberflächenbereiche 8 der Messelektroden 4 mit einem Laserstrahl 9 bestrahlt werden. Dadurch wird das Trägermaterial 5 im Oberflächenbereich 8 der Messelektroden 4 zumindest teilweise abgetragen, sodass dadurch das eingebettete elektrisch gut leitfähige Leitmaterial 6 im Oberflächenbereich 8 der Messelektroden 4 zumindest teilweise freigelegt wird, wodurch die elektrische Oberflächenleitfähigkeit der Messelektroden 4 erhöht wird. Mit dem Verfahren können die zuvor beschriebenen Nachteile der Anwendung eines mechanischen Strahlverfahrens weitestgehend vermieden werden.

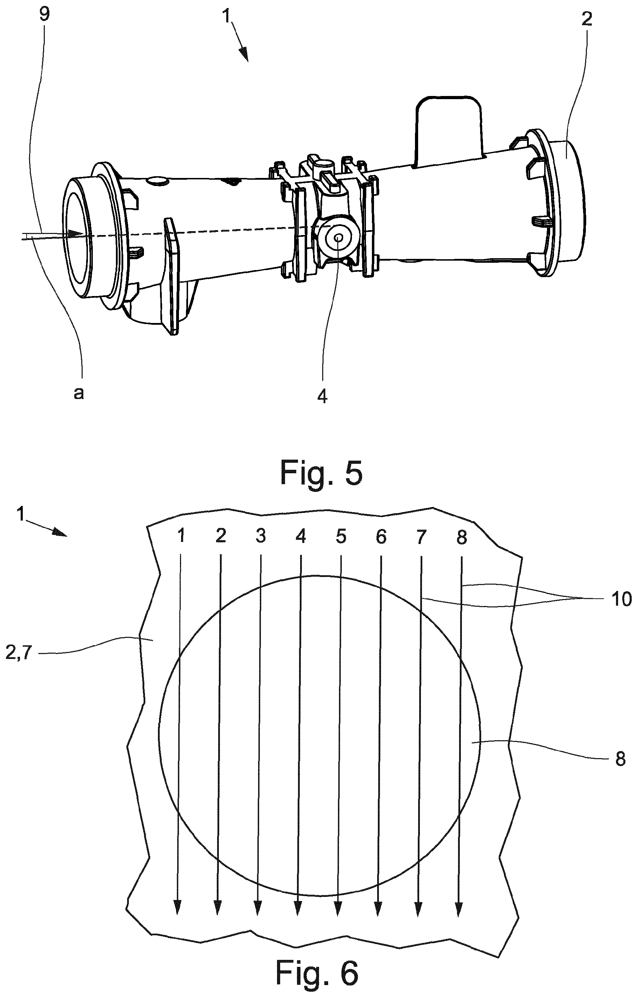

Es hat sich als vorteilhaft herausgestellt, wenn der Laserstrahl 9 flachwinklig auf die Oberflächenbereiche 8 der Messelektroden 4 gerichtet wird, wie das in den Fig. 4 und 5 auch angedeutet ist. Die erzielten Oberflächenergebnisse unterscheiden sich vorteilhaft von Ergebnissen, die mit steilen Einstrahlwinkeln erzielt werden, die also im Bereich der Flächennormalen N der Oberflächenbereiche 8 liegen.

In den dargestellten Ausführungsbeispielen ist die Wellenlänge des Laserstrahls 9 so gewählt, dass die Photonenenergie die molekularen Bindungskräfte des Trägermaterials 5 überwindet und das Trägermaterial 5 freisetzt. Der hier verwendete Laserstrahl 9 ist gepulst mit einer Pulsdauer im Bereich von einigen Femtosekunden. Damit lassen sich sehr hohe, gleichzeitig aber sehr kurzzeitige Energieeinträge erreichen, die für den hier angestrebten Effekt vorteilhaft sind.

Der Laserstrahl 9 hat im Auftreffbereich auf der Oberfläche 8 der Messelektroden 4 einen maximalen Durchmesser von 20 Mikrometern, der Oberflächenbereich 8 der Messelektroden 4 wird also nicht ganzflächig bestrahlt, sondern ganz im Gegenteil nur in einem ganz kleinen Ausschnitt. Dies hat zur Folge, dass der Oberflächenbereich 8 der Messelektroden 4 mit dem Laserstrahl 9 abgerastert werden muss, um die Oberflächenbehandlung für einen entsprechend großen Teil des Oberflächenbereichs 8 zu realisieren.

Fig. 6 zeigt, dass der Laserstrahl 9 beispielsweise in geraden parallelen Linien 10 über den Oberflächenbereich 8 der Messelektroden 4 geführt wird. Wenn die parallelen Linien 10 zueinander beabstandet sind, dann bilden sich nach Abfahren der Linien 10 mit dem Laserstrahl 9 ein Rillenmuster mit abwechselnden Tälern und Höhen. Um das Material im Oberflächenbereich 8 der Messelektroden 4 thermisch nicht zu stark zu belasten, empfiehlt es sich, benachbarte Linien 10 nicht zeitlich nacheinander herzustellen, sondern benachbarte Linien 10 zunächst zu überspringen. In Fig. 6 ist die Bearbeitungsreihenfolge anhand der Ziffern 1 bis 8 angedeutet.

Fig. 5 zeigt, dass der flache Einstrahlwinkel a (in Bezug auf die Oberfläche 8 der Messelektrode 4) es auch gestattet, die Oberflächenbehandlung problemlos auch in engen Messrohrgeometrien anzuwenden.

Die parallelen Linien 10 in Fig. 6 sind absichtlich über den Oberflächenbereich 8 der Messelektroden 4 hinausgeführt, also auf das Gebiet der Innenwand 7 des Messrohrs 2. Darüber hinaus verlaufen die geraden Linien 10 in Strömungsrichtung des Mediums bei Betrieb des magnetisch-induktiven Durchflussmessgeräts.

In den gezeigten Ausführungsbeispielen sind die Wellenlänge des Laserstrahls 9, die Pulsdauer des Laserstrahls 9 und die Bewegungsgeschwindigkeit des Laserstrahls 9 so aufeinander abgestimmt, dass das an der Messelektrode 4 verbleibende Trägermaterial 5 chemisch nicht verändert wird, insbesondere also die molekulare Struktur nicht geschädigt wird. Das Gleiche trifft auch auf das freigelegte Leitmaterial 6 zu, das in dieser Hinsicht auch nicht verändert wird durch die Oberflächenbehandlung.

In gewissen Grenzen lässt sich durch die Wahl der vorgenannten Parameter (Wellenlänge des Laserstrahls 9, Pulsdauer des Laserstrahls 9, Bewegungsgeschwindigkeit des Laserstrahls 9) auch beeinflussen, ob sich das abgetragene Trägermaterial 5 und/oder etwaig abgetragenes Leitmaterial 6 im Oberflächenbereich 8 der Messelektroden 4 wieder niederschlägt. Die Wahl der Parameter ist hier jedoch eingeschränkt, da die Parameter in erster Linie danach eingestellt werden, optimale Abtragergebnisse zu erzielen. Um den Niederschlag abgetragenen Trägermaterials 5 oder abgetragenen Leitmaterials 6 zu verhindern, wird während der Bestrahlung mit dem Laserstrahl 9 das Messrohr 2 von einem Gas durchströmt, vorliegend wird Stickstoff verwendet.

Für die Konstellation, dass es sich bei dem Trägermaterial 5 um Polyetheretherketon und bei dem Leitmaterial 6 um elektrisch leitfähige Kohlenstofffasern handelt, hat sich für die Wellenlänge des Laserstrahls 9 ein Bereich von 355 nm bis 380 nm bewährt.

Das Verfahren 1 hat eine sehr hohe und stabile Wiederholgenauigkeit, auch hinsichtlich der erzielten Gesamtleitfähigkeit der Messelektroden 4. Vorliegend wird die Impedanz der oberflächenbehandelten Messelektroden 4 in einem Überprüfungsschritt gemessen und die zuvor genannten Parameter Wellenlänge des Laserstrahls 9, Pulsdauer des Laserstrahls 9 und Bewegungsgeschwindigkeit des Laserstrahls 9 werden so aufeinander abgestimmt, das eine gewünschte vorgegebene Impedanz der oberflächenbehandelten Messelektroden 4 erreicht wird. Dieser Prüfschritt wird insbesondere dann wiederholt, wenn im Produktionsprozess eine Chargenänderung bei dem Trägermaterial 5 und/oder bei dem Leitmaterial 6 auftritt. Bei einer alternativen Ausgestaltung des Verfahrens wird die Impedanz einer Medium/Oberflächen-Grenzschicht der oberflächenbehandelten Messelektroden 4 in dem Überprüfungsschritt gemessen und verglichen mit einer vorgegebenen Impedanz der Medium/Oberflächen-Grenzschicht der oberflächenbehandelten Messelektroden 4.

### Bezugszeichen

- 1: Verfahren
- 2: Messrohr
- 4: Messelektroden
- 5: Trägermaterial
- 6: Leitmaterial
- 7: Innenwand des Messrohrs
- 8: Oberflächenbereiche der Messelektroden
- 9: Laserstrahl
- 10: gerade Linien

- N: Oberflächennormale
- a: Winkel zur Messelektrodenoberfläche

## Patentansprüche

1. Verfahren (1) zur Oberflächenbehandlung von in ein Messrohr (2) für magnetisch-induktive Durchflussmessgeräte (3) eingesetzte Messelektroden (4), wobei die Messelektroden (4) zumindest ein elektrisch schlecht leitfähiges Trägermaterial (5) und ein in das Trägermaterial (5) eingebettetes elektrisch gut leitfähiges Leitmaterial (6) aufweisen, sodass die Messelektroden (4) insgesamt eine für die Messaufgabe des magnetisch-induktiven Durchflussmessgeräts (3) geeignete elektrische Gesamtleitfähigkeit aufweisen,
**dadurch gekennzeichnet,**
**dass** die mit der Innenwand (7) des Messrohrs (2) abschließenden Oberflächenbereiche (8) der Messelektroden (4) mit wenigstens einem Laserstrahl (9) bestrahlt werden, dass dadurch das Trägermaterial (5) im Oberflächenbereich (8) der Messelektroden (4) zumindest teilweise abgetragen wird und dadurch das eingebettete elektrisch gut leitfähige Leitmaterial (6) im Oberflächenbereich (8) der Messelektroden (4) zumindest teilweise freigelegt wird und die elektrische Oberflächenleitfähigkeit der Messelektroden (4) erhöht wird.

2. Verfahren (1) nach Anspruch 1, **dadurch gekennzeichnet, dass** der Laserstrahl (9) flachwinklig auf die Oberflächenbereiche (8) der Messelektroden (4) gerichtet wird, insbesondere in einem Winkel von mehr als 75° zur Flächennormalen (N) der Oberflächenbereiche (8) der Messelektroden (4), bevorzugt von mehr als 83° zur Flächennormalen (N) der Oberflächenbereiche (8) der Messelektroden (4).

3. Verfahren (1) nach Anspruch 1 oder 2, **dadurch gekennzeichnet, dass** die Wellenlänge des Laserstrahls (9) so gewählt wird, dass die Photonenenergie die molekularen Bindungskräfte des Trägermaterials (5) überwindet und das Trägermaterial (5) freisetzt.

4. Verfahren (1) nach einem der Ansprüche 1 bis 3, **dadurch gekennzeichnet, dass** der Laserstrahl (9) gepulst ist, insbesondere mit einer Pulsdauer im Bereich von weniger als 50 Femtosekunden, besonders bevorzugt im Bereich von weniger als 10 Femtosekunden.

5. Verfahren (1) nach einem der Ansprüche 1 bis 4, **dadurch gekennzeichnet, dass** der Laserstrahl (9) im Auftreffbereich auf der Oberfläche (8) der Messelektroden (4) einen maximalen Durchmesser von 100 µm, vorzugsweise einen maximalen Durchmesser von 50 µm, besonders bevorzugt einen maximalen Durchmesser von 20 µm aufweist.

6. Verfahren (1) nach einem der Ansprüche 1 bis 5, **dadurch gekennzeichnet, dass** der Laserstrahl (9) in geraden Linien (10) über den Oberflächenbereich (8) der Messelektroden (4) geführt wird, insbesondere in geraden parallelen Linien (10), insbesondere wobei die Linien (10) ein Rillenmuster mit abwechselnden Tälern und Höhen bilden, besonders bevorzugt wobei bei der Herstellung des Rillenmusters benachbarte Linien (10) nicht zeitlich nacheinander hergestellt werden.

7. Verfahren (1) nach Anspruch 6, **dadurch gekennzeichnet, dass** parallele Linien (10) in Richtung der axialen Messrohrerstreckung des Messrohrs (2) hergestellt werden, also parallel zur Strömungsrichtung eines Mediums durch das Messrohr (2).

8. Verfahren (1) nach einem der Ansprüche 1 bis 7, **dadurch gekennzeichnet, dass** die Wellenlänge des Laserstrahls (9) und/oder die Pulsdauer des Laserstrahls (9) und/oder die Bewegungsgeschwindigkeit des Laserstrahls (9) so aufeinander abgestimmt werden, dass zumindest das an der Messelektrode (4) verbleibende Trägermaterial (5) chemisch nicht verändert wird, insbesondere wobei auch das freigelegte Leitmaterial (6) chemisch und/oder strukturell nicht verändert wird.

9. Verfahren (1) nach einem der Ansprüche 1 bis 8, **dadurch gekennzeichnet, dass** die Wellenlänge des Laserstrahls (9) und/oder die Pulsdauer des Laserstrahls (9) und/oder die Bewegungsgeschwindigkeit des Laserstrahls (9) so aufeinander abgestimmt werden, dass sich das abgetragene Trägermaterial (5) und/oder das abgetragene Leitmaterial (6) im Oberflächenbereich (8) der Messelektroden (4) nicht niederschlagen.

10. Verfahren (1) nach einem der Ansprüche 1 bis 9, **dadurch gekennzeichnet, dass** das Messrohr (2) während der Bestrahlung mit dem Laserstrahl (9) von einem Gas durchströmt wird, wobei das Gas das von den Messelektroden (4) abgetragene Material fortträgt, insbesondere handelt es sich bei dem Gas um ein möglichst reaktionsträges Gas, also um ein Inertgas, vorzugsweise wird dazu Stickstoff verwendet.

11. Verfahren (1) nach einem der Ansprüche 1 bis 10, **dadurch gekennzeichnet, dass** als Trägermaterial (5) Polyetheretherketon (Peek) gewählt wird, insbesondere wobei als Leitmaterial (6) elektrisch leitfähige Kohlenstofffasern gewählt werden.

12. Verfahren (1) nach Anspruch 11, **dadurch gekennzeichnet, dass** die Wellenlänge des Laserstrahls (9) im Bereich von 355 nm und 500 nm gewählt wird, insbesondere im Bereich von 355 nm und 380 nm.

13. Verfahren (1) nach einem der Ansprüche 1 bis 12, **dadurch gekennzeichnet, dass** die Impedanz der oberflächenbehandelten Messelektroden (4), insbesondere die Impedanz einer Medium/Oberflächen-Grenzschicht der oberflächenbehandelten Messelektroden (4), in einem Überprüfungsschritt gemessen wird und die Parameter Wellenlänge des Laserstrahls (9) und/oder Pulsdauer des Laserstrahls (9) und/oder Bewegungsgeschwindigkeit des Laserstrahls (9) so gewählt oder aufeinander abgestimmt werden, dass eine vorgegebene Impedanz der oberflächenbehandelten Messelektroden (4), insbesondere eine vorgegebene Impedanz der Medium/Oberflächen-Grenzschicht der oberflächenbehandelten Messelektroden (4), erreicht wird, insbesondere wobei der Überprüfungsschritt im Produktionsprozess nach einer Chargenänderung des Trägermaterials (5) und/oder des Leitmaterials (6) durchgeführt wird.

## Claims

1. Method (1) for the surface treatment of measuring electrodes (4) inserted into a measuring tube (2) for magnetic-inductive flowmeters (3), wherein the measuring electrodes (4) have at least a carrier material (5) of poor electrical conductivity and a conductive material (6) of good electrical conductivity embedded in the carrier material (5), so that the measuring electrodes (4) as a whole have an overall electrical conductivity suitable for the measuring task of the magnetic-inductive flowmeter (3),
**characterized in**
**that** the surface regions (8) of the measuring electrodes (4) terminating with the inner wall (7) of the measuring tube (2) are irradiated with at least one laser beam (9), that thereby the carrier material (5) in the surface region (8) of the measuring electrodes (4) is at least partially removed and thereby the embedded electrically highly conductive conductive material (6) in the surface region (8) of the measuring electrodes (4) is at least partially exposed and the electrical surface conductivity of the measuring electrodes (4) is increased.

2. Method (1) according to claim 1, **characterized in that** the laser beam (9) is directed onto the surface regions (8) of the measuring electrodes (4) at a shallow angle, in particular at an angle of more than 75° to the surface normal (N) of the surface regions (8) of the measuring electrodes (4), preferably of more than 83° to the surface normal (N) of the surface regions (8) of the measuring electrodes (4).

3. Method (1) according to any one of claims 1 or 2, **characterized in that** the wavelength of the laser beam (9) is selected such that the photon energy overcomes the molecular binding forces of the carrier material (5) and releases the carrier material (5).

4. Method (1) according to any one of claims 1 to 3, **characterized in that** the laser beam (9) is pulsed, in particular with a pulse duration in the range of less than 50 femtoseconds, particularly preferably in the range of less than 10 femtoseconds.

5. Method (1) according to any one of claims 1 to 4, **characterized in that** the laser beam (9) in the impact area on the surface (8) of the measuring electrodes (4) has a maximum diameter of 100 µm, preferably a maximum diameter of 50 µm, particularly preferably a maximum diameter of 20 µm.

6. Method (1) according to any one of claims 1 to 5, **characterized in that** the laser beam (9) is guided in straight lines (10) over the surface region (8) of the measuring electrodes (4), in particular in straight parallel lines (10), in particular wherein the lines (10) form a groove pattern with alternating valleys and heights, particularly preferably wherein, in the production of the groove pattern, adjacent lines (10) are not produced one after the other in time.

7. Method (1) according to claim 6, **characterized in that** parallel lines (10) are produced in the direction of the axial measuring tube extension of the measuring tube (2), i.e. in the direction of flow of a medium through the measuring tube (2).

8. Method (1) according to any one of claims 1 to 7, **characterized in that** the wavelength of the laser beam (9) and/or the pulse duration of the laser beam (9) and/or the speed of movement of the laser beam (9) are adapted to one another in such a way that at least the carrier material (5) remaining on the measuring electrode (4) is not chemically changed, in particular wherein the exposed conductive material (6) is also not chemically and/or structurally changed.

9. Method (1) according to any one of claims 1 to 8, **characterized in that** the wavelength of the laser beam (9) and/or the pulse duration of the laser beam (9) and/or the speed of movement of the laser beam (9) are adapted to one another in such a way that the removed carrier material (5) and/or the removed conductive material (6) are not deposited in the surface region (8) of the measuring electrodes (4).

10. Method (1) according to any one of claims 1 to 9, **characterized in that** a gas flows through the measuring tube (2) during irradiation with the laser beam (9), wherein the gas carries away the material removed from the measuring electrodes (4), in particular this is a gas that is as inert as possible, i.e. an inert gas, preferable nitrogen is used here.

11. Method (1) according to any one of claims 1 to 10, **characterized in that** polyetheretherketone (Peek) is selected as the substrate (5), in particular wherein electrically conductive carbon fibers are selected as the conducting material (6).

12. Method (1) according to claim 11**, characterized in that** the wavelength of the laser beam (9) is selected in the range of 355 nm and 500 nm, in particular in the range of 355 nm and 380 nm.

13. Method (1) according to any one of claims 1 to 12, **characterized in that** the impedance of the surface-treated measuring electrodes (4), in particular the impedance of a medium/surface interface of the surface-treated measuring electrodes (4), is measured in a checking step and the parameters wavelength of the laser beam (9) and/or pulse duration of the laser beam (9) and/or speed of movement of the laser beam (9) are selected or adapted to one another in such a way that a predetermined impedance of the surface-treated measuring electrodes (4), in particular the predetermined impedance of a medium/surface interface of the surface-treated measuring electrodes (4), is achieved, in particular wherein the verification step is performed in the production process after a batch change of the carrier material (5) and/or the conductive material (6).

## Revendications

1. Procédé (1) de traitement de surface d'électrodes de mesure (4) utilisées dans un tube de mesure (2) pour des débitmètres à induction magnétique (3), les électrodes de mesure (4) comprenant au moins un matériau de support (5) électriquement faiblement conducteur et un matériau conducteur (6) électriquement bon conducteur noyé dans le matériau support (5), de sorte que les électrodes de mesure (4) présentent globalement une conductivité électrique totale appropriée à la tâche de mesure du débitmètre à induction magnétique (3),
**caractérisé en ce que**
les zones de surface (8) des électrodes de mesure (4) affleurant à la paroi intérieure (7) du tube de mesure (2) sont irradiées par au moins un faisceau laser (9), de sorte que le matériau de support (5), dans la zone de surface (8) des électrodes de mesure (4), est au moins partiellement enlevé et que le matériau conducteur (6) électriquement bon conducteur noyé est ainsi au moins partiellement exposé dans la zone de surface (8) des électrodes de mesure (4), et que la conductivité électrique de surface des électrodes de mesure (4) est augmentée.

2. Procédé (1) selon la revendication 1, **caractérisé en ce que** le faisceau laser (9) est dirigé vers les zones de surface (8) des électrodes de mesure (4) sous un angle de faible valeur, en particulier sous un angle de plus de 75° par rapport à la normale de surface (N) des zones de surface (8) des électrodes de mesure (4), de préférence de plus de 83° par rapport à la normale de surface (N) des zones de surface (8) des électrodes de mesure (4).

3. Procédé (1) selon la revendication 1 ou 2, **caractérisé en ce que** la longueur d'onde du faisceau laser (9) est sélectionnée de telle sorte que l'énergie de photon surmonte les forces de liaison moléculaire du matériau de support (5) et libère le matériau de support (5).

4. Procédé (1) selon l'une quelconque des revendications 1 à 3, **caractérisé en ce que** le faisceau laser (9) est pulsé, en particulier avec une durée d'impulsion inférieure à 50 femtosecondes, et de manière particulièrement préférée, dans une plage inférieure à 10 femtosecondes.

5. Procédé (1) selon l'une quelconque des revendications 1 à 4, **caractérisé en ce que** le faisceau laser (9) présente, dans la zone d'incidence sur la surface (8) des électrodes de mesure (4), un diamètre maximal de 100 µm, de préférence un diamètre maximal de 50 µm, et de manière particulièrement préférée, un diamètre maximal de 20 µm.

6. Procédé (1) selon l'une quelconque des revendications 1 à 5, **caractérisé en ce que** le faisceau laser (9) est guidé suivant des lignes droites (10) sur la zone de surface (8) des électrodes de mesure (4), en particulier suivant des lignes droites parallèles (10), en particulier dans lequel les lignes (10) forment un motif de rainures avec des creux et des sommets alternés, et de manière particulièrement préférée dans lequel, lors de la réalisation du motif de rainures, des lignes (10) adjacentes ne sont pas réalisées consécutivement dans le temps.

7. Procédé (1) selon la revendication 6, **caractérisé en ce que** des lignes parallèles (10) sont réalisées dans la direction de l'étendue axiale du tube de mesure (2), donc parallèlement à la direction d'écoulement d'un milieu à travers le tube de mesure (2).

8. Procédé (1) selon l'une quelconque des revendications 1 à 7, **caractérisé en ce que** la longueur d'onde du faisceau laser (9) et/ou la durée d'impulsion du faisceau laser (9) et/ou la vitesse de déplacement du faisceau laser (9) sont accordées les unes aux autres de telle sorte qu'au moins le matériau de support (5) restant sur l'électrode de mesure (4) ne soit pas modifié chimiquement, en particulier également dans lequel le matériau conducteur (6) exposé n'est pas modifié chimiquement et/ou structurellement.

9. Procédé (1) selon l'une quelconque des revendications 1 à 8, **caractérisé en ce que** la longueur d'onde du faisceau laser (9) et/ou la durée d'impulsion du faisceau laser (9) et/ou la vitesse de déplacement du faisceau laser (9) sont accordées les unes aux autres de telle sorte que le matériau de support (5) enlevé et/ou le matériau conducteur (6) enlevé ne se déposent pas dans la zone de surface (8) des électrodes de mesure (4).

10. Procédé (1) selon l'une quelconque des revendications 1 à 9, **caractérisé en ce que** le tube de mesure (2) est traversé par un gaz pendant l'irradiation par le faisceau laser (9), le gaz emportant le matériau enlevé des électrodes de mesure (4), le gaz étant en particulier un gaz aussi peu réactif que possible, donc un gaz inerte, de l'azote étant de préférence utilisé à cet effet.

11. Procédé (1) selon l'une quelconque des revendications 1 à 10, **caractérisé en ce que** de la polyétheréthercétone (PEEK) est sélectionnée en tant que matériau de support (5), en particulier dans lequel des fibres de carbone électriquement conductrices sont sélectionnées en tant que matériau conducteur (6).

12. Procédé (1) selon la revendication 11, **caractérisé en ce que** la longueur d'onde du faisceau laser (9) est sélectionnée dans la plage de 355 nm à 500 nm, en particulier dans la plage de 355 nm à 380 nm.

13. Procédé (1) selon l'une quelconque des revendications 1 à 12, **caractérisé en ce que** l'impédance des électrodes de mesure (4) traitées en surface, en particulier l'impédance d'une couche limite milieu/surface des électrodes de mesure (4) traitées en surface, est mesurée lors d'une étape de vérification, et les paramètres de longueur d'onde du faisceau laser (9) et/ou de durée d'impulsion du faisceau laser (9) et/ou de vitesse de déplacement du faisceau laser (9) sont sélectionnés ou accordés les uns aux autres de telle sorte qu'une impédance prédéfinie des électrodes de mesure (4) traitées en surface, en particulier une impédance prédéfinie de la couche limite milieu/surface des électrodes de mesure (4) traitées en surface, est atteinte, en particulier dans lequel l'étape de vérification est effectuée lors du processus de production après un changement de lot du matériau de support (5) et/ou du matériau conducteur (6).
